# EUROPEAN PATENT SPECIFICATION

(11) **EP 4 176 666 B1**
(45) Date of publication and mention of the grant of the patent: **28.10.2026**
(21) Application number: 20948876.6
(22) Date of filing: 06.08.2020
(51) Int. Cl.: H04W 72/02, H04W 72/25, H04W 92/18

(54) **METHODS AND SYSTEMS FOR EXCHANGING INFORMATION FOR SIDELINK COMMUNCIATIONS**
VERFAHREN UND SYSTEME ZUM AUSTAUSCH VON INFORMATIONEN FÜR SIDELINK-KOMMUNIKATIONEN
PROCÉDÉS ET SYSTÈMES POUR ÉCHANGER DES INFORMATIONS POUR DES COMMUNICATIONS DE LIAISON LATÉRALE

(43) Date of publication of application: 10.05.2023
(73) Proprietor: ZTE Corporation, Shenzhen, Guangdong 518057 (CN)
(72) Inventor: DU, Weiqiang, Shenzhen, Guangdong 518057 (CN); LUO, Wei, Shenzhen, Guangdong 518057 (CN); CHEN, Lin, Shenzhen, Guangdong 518057 (CN); ZHANG, Boyuan, Shenzhen, Guangdong 518057 (CN)
(74) Representative: Vossius & Partner Patentanwälte Rechtsanwälte mbB
(86) International application number: PCT/CN2020/107478
(87) International publication number: WO 2022/027467

(56) References cited:
- WO-A1-2018/201415
- WO-A1-2021/207459
- CN-A- 110 958 586
- CN-A- 111 034 293
- LG ELECTRONICS: "Discussion on resource allocation for Mode 2", vol. RAN WG1, no. Reno, USA; 20191118 - 20191122, 9 November 2019 (2019-11-09), XP051823495, Retrieved from the Internet <URL:https://ftp.3gpp.org/tsg_ran/WG1_RL1/TSGR1_99/Docs/R1-1912588.zip R1-1912588 Discussion on resource allocation for Mode 2.doc> [retrieved on 20191109]
- INTEL CORPORATION: "Sidelink Resource Allocation Design for NR V2X Communication", 3GPP DRAFT; R1-1904296, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, 3 April 2019 (2019-04-03), pages 1 - 15, XP051707175
- LG ELECTRONICS INC.: "Support of unicast and groupcast for NR sidelink mode 1", 3GPP TSG-RAN WG2 MEETING #104; R2-1818296, 3RD GENERATION PARTNERSHIP PROJECT (3GPP), SOPHIA-ANTIPOLIS CEDEX ; FRANCE, 12 November 2018 (2018-11-12), Spokane, USA; 20181112 - 20181116, XP051557797
- NOKIA, NOKIA SHANGHAI BELL: "NR Sidelink resource allocation for V2X communications", 3GPP TSG-RAN WG2 MEETING #104; R2-1817680, 3RD GENERATION PARTNERSHIP PROJECT (3GPP), SOPHIA-ANTIPOLIS CEDEX ; FRANCE, 12 November 2018 (2018-11-12), Spokane, USA; 20181112 - 20181116, XP051557204

## Description

### TECHNICAL FIELD

This disclosure is directed generally to wireless communications.

### BACKGROUND

Mobile communication technologies are moving the world toward an increasingly connected and networked society. The rapid growth of mobile communications and advances in technology have led to greater demand for capacity and connectivity. Other aspects, such as energy consumption, device cost, spectral efficiency, and latency are also important to meeting the needs of various communication scenarios. Various techniques, including new ways to provide higher quality of service, longer battery life, and improved performance are being discussed.

3GPP R1-1912588 relates to discussion on resource allocation for Mode 2.

3GPP R1-1904296 relates to sidelink resource allocation design for NR V2X communication.

Later published WO 2021/207459 A1 relates to sidelink enhancements.

### SUMMARY

This patent document describes, among other things, techniques for communicating in an in a sidelink deployment for New Radio (NR).

The invention is specified by the independent claims. Preferred embodiments are defined in the dependent claims. In the following description, although numerous features may be designated as optional, it is nevertheless acknowledged that all features comprised in the independent claims are not to be read as optional.

Any embodiment, aspect, example or implementation not being part of the claims, is only presented as information.

### BRIEF DESCRIPTION OF DRAWINGS

FIG. 1 illustrates an example V2X communication system.
FIG. 2 illustrates an exemplary exchange of assistance resource select information between two UEs.
FIG. 3 illustrates an embodiment of an assistance resource selection inquiry and response.
FIG. 4 illustrates an embodiment where assistance resource selection information is broadcast
FIG. 5 illustrates an embodiment where assistance resource selection is transmitted, and a configuration is provided in response.
FIG. 6 illustrates an embodiment where assistance resource information is obtained and a grant is created.
FIG. 7 illustrates the transmission of assistance resource selection configurations.
FIG. 8 illustrates the transmission of an assistance resource selection inquiry.
FIG. 9 illustrates a flowchart for a search of UE-A, where UE-B searches for a UE-A to provide assistance resource selection information
FIG. 10 illustrates signaling a resource configuration between devices
FIG. 11 illustrates the receipt of a configuration from a base station.
FIG. 12 illustrates a report to a base station.
FIG. 13 illustrates a creation of a grant.
FIG. 14 shows an example of a wireless communication system where techniques in accordance with one or more embodiments of the present technology can be applied.
FIG. 15 is a block diagram representation of a portion of a radio station in accordance with one or more embodiments of the present technology can be applied.

### DETAILED DESCRIPTION

The disclosure relates to wireless systems. More specifically, it relates to communications between UE for side link communication, and for the scheduling of resources. Parameters are exchanged by one UE to another so that the UE can be configured.

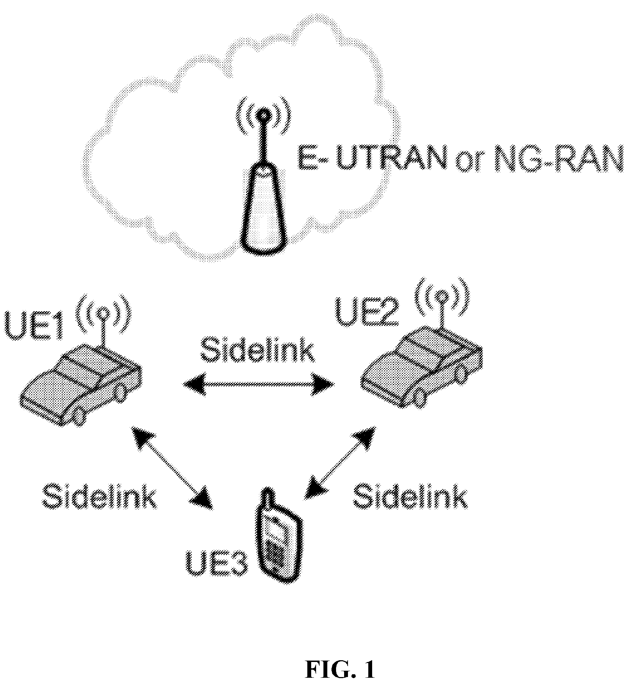

FIG. 1 is a block diagram of an example V2X communication system. In the LTE (Long Term Evolution)-based V2X communications study organized by 3GPP, user-based devices (User Equipment) may communicate using V2X communication between a direct/sidelink link. For example, data may not be forwarded by the base station and the core network, and may be directly transmitted by the source UE to the target UE through an air interface (PC5 interface), as shown in FIG. 1.

With the advancement of communication technology and the development of the automation industry, the V2X communication scenario is further extended and has higher performance requirements. 3GPP has established research on vehicle networking communication based on advanced V2X services of the fifth-generation mobile communication technology (5G), including 5G air interface-based vehicle networking communication and 5G direct link (sidelink)-based vehicle networking communication.

For NR-based vehicle to everything (V2X) sidelink communications, PC5 interface RRC signaling interaction may be supported. Specifically, PC5 RRC signaling may include a message for transmitting capability of UEs. The present embodiments relates to obtaining peer UE's capability information and interacting for PC5 UE capability information exchange for sidelink transmission parameters selection. In addition, PC5 RRC signaling may not be transmitted without security protection, and the present embodiments may provide a security protection mechanism for protecting PC5 RRC signaling at the access-stratum (AS) layer.

It should be understood that any type of UEs can be used, as known in the art, and that the specific hardware is not limited to the configurations described herein. It should also be understood that any configurations, and numbers, of networked devices can be used.

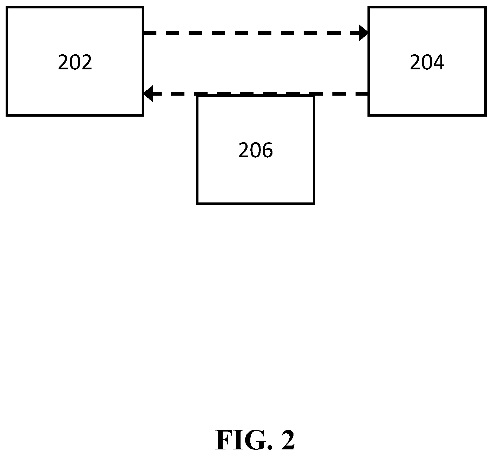

Fig. 2 illustrates an exemplary exchange of assistance resource select information between two UEs. UE 202 sends assistance resource selection configuration to the second UE 204, and UE 204 can send assistance resource selection information 206 to a UE 202. The assistance resource selection information can have several pieces of information, and the assistance resource selection configuration 206 can likewise have several pieces of information. The UE 202 can use this information to configure a grant of resources.

In an embodiment, the assistance resource selection configuration comprises: (a) a measurement object, or (b) a report configuration, or (c) assistance resource selection information for the second wireless to report, or (d) sensing parameters, and the sensing parameters are used by the UE 204 to provide the report measurement results.

The sensing parameters can have any of: a value of SL_RESOURCE_RESELECTION_COUNTER or a number of sub-channels or a resource reservation interval or a Service Priority, or a pre-emption priority, or an indication of whether a pre-emption is enabled or disabled, a Packet Delay Budget, or a Hybrid Automatic Repeat Request (HARQ) feedback configuration that indicates whether the UE 202 needs a sensing resource pool with a PSFCH resource, or a sensing window, defined by a timer interval, or a candidate resource selection window defined by the timer interval, or a bit map of slot in a candidate resource selection window that the UE 202 needs for sensing or partial sensing, or values that are allowed for the signaling of the resource reservation period, or an Reference Signal Received Power (RSRP) threshold, or a reference signal such as a Physical Sidelink Shared Channel-RSRP (PSSCH-RSRP) or a Physical Sidelink Control Channel-RSRP (PSCCH-RSRP), or a percentage of a candidate single-slot resources remaining in the candidate resource set, or a step of an RSRP-threshold increment, and the timer interval can have a value T1 and a value T2, wherein T1 and T2 are selected from a range of [minT1, maxT2] and [minT1, maxT2], and wherein a timing window is defined by the time interval [T1, T2]. In an embodiment the sensing parameters are configured per a service priority. In an embodiment, the measurement object comprises a resource pool configuration or a resource pool ID, and the resource pool configuration comprises a supported sensing mode, wherein the supported sensing mode is a sensing or partial sensing mode.

In an embodiment, the assistance resource selection information comprises: (a) an index of a slot in a sensing window determined by sensing parameters that have not been monitored, or (b) a priority included in Sidelink Control Information (SCI) received in a specific single-slot, or (c) a slot that receives a resource reservation period or a priority, or (d) a RSRP measurement result of a single slot resource in a resource selection window, and the position of the slot in a resource pool, or (e) a RSRP threshold during sensing of the UE 204, or (f) a set of candidate resources that can be used by the UE 202, or (g) a set of candidate resources that can not be used by the UE 202, or (h) whether the assistance resource selection information can be directly used by the UE 202 or whether the candidate resource needs to be further selected by the UE 202, or (i) whether the assistance resource selection information can be used by the UE 202 via one of random selection or sensing or partial sensing, or (j) whether the information can be used for a specific priority, or logical channel, or Radio Bearer (DRB), or destination, or resource pool, or Channel Busy Ratio (CBR). In an embodiment, the assistance resource selection information is measurement results. The report configuration comprises at least one: (1) a resource reservation period received in a SCI changed in a single slot occupied by another resource reservation period that was previously received, or (2) a priority received in the SCI changed in a single slot occupied by another resource reservation period that was previously received, or (3) the number of single-slot resources in a set of candidate resources changed, or (4) the slot number of single-slot resources in a set of candidate resources changed, or (5) a RSRP measurement result of one single-slot resource in a resource selection window changed, (6) the RSRP measurement result of one single-slot resource in the resource selection window is higher than configured threshold, or (7) a resource reservation period received in the SCI of a single-slot is higher than a configured threshold, or (8) a priority received in the SCI of a single-slot is higher than a configured threshold, or (9) the number of single-slot resources in a set of candidate resources is higher than a configured threshold, or (10) the number of new available single-slot resources in a set of candidate resources is higher than a configured threshold, or (11) the number of available single-slot resource that becomes unavailable in a set of candidate resources is higher than a configured threshold, or (12) the RSRP measurement result of one single-slot resource in the resource selection window is lower than configured threshold, or (13) the resource reservation period received in the SCI of same single-slot is lower than a configured threshold, or (14) a priority received in SCI of same single-slot is lower than a configured threshold, or (15) the number of single-slot resource in a set of candidate resources is higher than a configured threshold, or (16) the number of new available single-slot resource in a set of candidate resources is lower than a configured threshold, or (17) the number of available single-slot resource that becomes unavailable in a set of candidate resources is lower than a configured threshold, or (18) a threshold, or (19) an indication regarding whether or not the UE shall initiate the measurement reporting procedure when a leaving condition is met, or (20) a hysteresis value, or (21) a timeToTrigger, wherein the timeToTrigger indicates the time during which specific criteria for the event needs to be met in order to trigger a measurement report, or (22) a reportInterval, wherein the reportInterval indicates the interval between periodical reports, or (23) a reportAmount, wherein the reportAmount indicates the number of measurement reports, or (24) a reportQuantity, wherein the reportQuantity indicates which factors in measurement results should be reported.

In an embodiment, the report configuration comprises: (1) a periodic report of RSRP measurement results of one single-slot resource in a resource selection window and the slot of SCI, or (2) a periodic report of resource reservation period included in the SCI received in a specific single-slot, or (3) a periodic report of a priority included in SCI received in a specific single-slot, or (4) a periodic report of slot in which receives resource reservation period or priority, or (5) a periodic report of a set of candidate resources. In an embodiment, the periodic report comprises a configuration that includes: (a) a portInterval, wherein the portInterval indicates the interval between periodic reports, or (b) a reportAmount, wherein the reportAmount indicates the number of measurement reports, or (c) a reportQuantity, wherein the reportQuantity factors in measurement results that should be reported. In an embodiment, the report configuration includes an report purpose of the assistance resource selection. In an embodiment, the report configuration can be configured: (a) per the UE 204, or (b) per destination, or (c) per priority of a logical channel, or (d) per logical channel, or (e) per CBR, or (f) per resource pool, or (g) per resource reserved pool. In an embodiment, the assistance resource selection information may be configured (a) per destination, or (b) per priority, or (c) per resource pool, or (d) per CBR, or (e) per logical channel. In another embodiment, the assistance resource selection information is provided according to a report configuration if an event or a periodic report is configured and triggered or indicated by the UE 202. In another embodiment, the report configuration that is indicated by the UE 202 is used to indicate to the UE 204 to provide the assistance resource selection information for: (a) a destination, or (b) a priority of a logical channel, or (c) or a resource pool, or (d) or a resource reserved period.

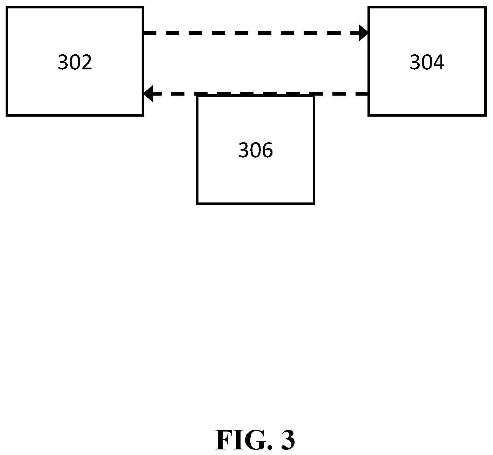

Fig. 3 illustrates an embodiment of an assistance resource selection inquiry and response. A UE 302 transmits to another UE 304 an assistance resource selection inquiry, and UE 304 provides an assistance resource selection response 306. The UE 302 can use this response to configure a grant of resources.

In an embodiment, the assistance resource selection inquiry comprises information regarding whether: (a) the UE 304 can provide an assistance resource selection information for itself, or (b) the UE 304 can provide an assistance resource selection measurement for a third wireless device. In an embodiment, the assistance resource selection response provides information regarding whether: (a) the UE 304 can provide assistance resource selection information for itself, or (b) the UE 304 can provide assistance resource selection information for a third wireless device.

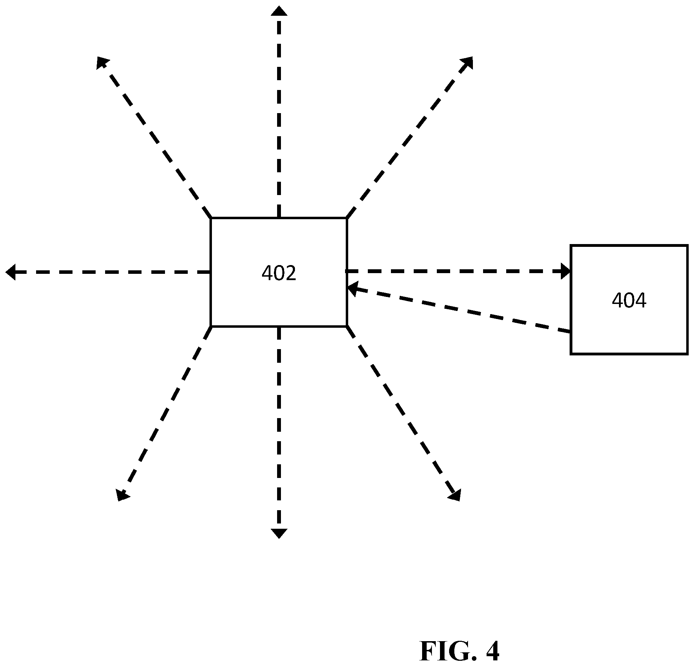

Fig. 4 illustrates an embodiment where assistance resource selection information is broadcast (denoted by the plurality of arrows). UE 402 broadcasts an assistance resource selection request, and receives a response to the broadcast from a UE 404. After, the UE 402 establishes a unicast connection with the UE 404. The assistance resource selection request can have an indication regarding providing a measurement for all of the UE 402's traffic.

In another embodiment, the signal can be groupcast with UE 402's group. UE 402 can checks whether a device having a unicast link with the UE 402 is capable of providing a measurement and, if not, a groupcast assistance resource selection measurement request is sent within all of the UE 402's group and, if no response is received, the, UE 402 broadcasts the request. In an embodiment, UE 404's response can have any of (a) an indication that the UE 404 can provide an assistance resource selection for all of the first device's traffic, or (b) a destination layer 2 ID of the UE 404, or (c) a resource selection mode, including sensing or partial sensing, or (d) a coverage state, including in coverage or out of coverage, or (e) RRC states, including an RRC connection or an RRC idle, or an RRC inactive.

In some instances, the UE 402 receives multiple response messages from a plurality of wireless devices and UE 402 chooses one of the plurality of wireless devices based on an ordered priority to establish the unicast connection, wherein the plurality includes the UE 404. The ordered priority can be: (1) an RRC connection, (2) an RRC inactive, and then (3) an RRC idle, wherein the RRC connection is the highest priority, the RRC inactive is the second highest priority, and the RRC idle is the third highest priority. The ordered priority can also be: (1) a sensing, and then (2) a partial sensing, wherein the sensing is the highest priority, and the partial sensing is the second highest priority. In another embodiment, the ordered priority can be: (1) in coverage, and then (2) out of coverage, where in coverage is the highest priority, and out of coverage is the second highest priority. Further, any UE that responds shall be prioritised to be chosen in accordance with the following order (highest priority listed first), (a) the UE header being within same group with the UE 402, or (b) or the UE being within the same group of the UE 402, or (c) the UE being without any unicast or groupcast link with the UE 402.

In an embodiment, a plurality of UEs exists, and the UE 402 receives multiple response messages from a plurality of wireless devices, wherein the UE 402 chooses one of the plurality of wireless devices randomly to establish a unicast connection.

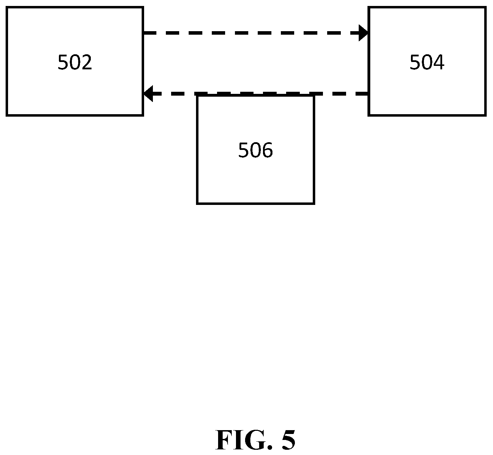

Fig. 5 illustrates an embodiment where assistance resource selection is transmitted, and a configuration is provided in response. Here, UE 502 transmits assistance resource selection information to a UE 504 and receives an assistance resource selection configuration 506 as a response. The resource selection configuration 506 can be utilized by the UE 502 to schedule resources.

In an embodiment, the assistance resource selection configuration includes: (a) an indication regarding whether the UE 502's resource selection will be scheduled by a base station when no UE is capable of providing a assistance resource selection, or (b) an indication regarding whether the UE 502's resource selection will be determined by itself when no UE capable of providing assistance resource selection was found, or (c) an indication regarding whether the UE 502's resource selection will be determined by itself taking assistance resource selection from the UE 504 into consideration. In an embodiment, the assistance resource selection configuration is: (1) per priority, or per logical channel, or per DRB/destination, wherein the assistance resource selection configuration indicates whether a transmission resource of the UE 502's traffic with a specified priority, logical channel, DRB, or destination will be determined by a base station or by determining by the UE 502 itself or by taking assistance resource selection configuration from the UE 504 into consideration, or (2) per CBR, which indicates whether the UE 502's resource selection will be determined by a base station or by determined by the UE 502 itself or by taking assistance resource selection configuration from the UE 504 into consideration, or (3) per resource pool, which indicates whether the resource pool supports the UE 502's traffic determined by the base station or determined by the UE 502 or by determining by taking the assistance resource selection configuration from the UE 504 into consideration. In yet another embodiment, the UE 502 is configured to select a resource: (a) as scheduled by a base station, or (b) by determining, or (c) by the UE 502 taking assistance resource selection from the UE 502 into consideration, wherein the UE 502 is configured to make the selection. The UE 502 can also be configured to send an indication to the base station to indicate that data will be scheduled by a base station, or sensing by it the first wireless, or scheduled according to the configuration.

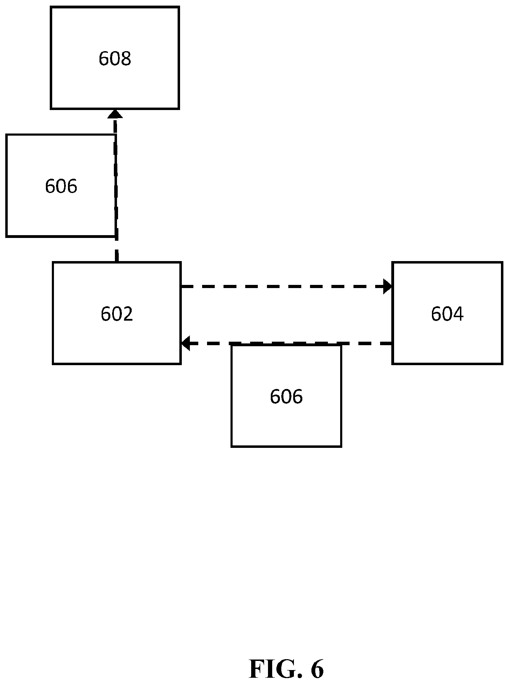

Fig. 6 illustrates an embodiment where assistance resource information is obtained and a grant is created. The UE 602 receives assistance resource selection information from the UE 604, and thereafter creates a grant of resources based at least in part on the assistance resource selection information. And thereafter performs a prioritization of logical channels.

In an embodiment, the resource selection information includes: (a) an index of a slot in a sensing window determined by sensing parameters that have not been monitored, or (b) a resource reservation period that is received in a SCI, and the index of a slot in which UE 604 receives is in a resource pool, or (c) a priority received in the SCI, and the index of a slot in which the UE 604 receives the SCI in a resource pool, or (d) a RSRP measurement result of a single-slot resource in the resource selection window and the position of a slot in a resource pool.

The resource selection information can indicate that it can be directly used by the UE 602 or that the UE 602 can use the information by sensing, where the UE 602 selects a transmission resource by performing a sensing procedure using parameters included in the assistance resource selection information. The resource selection information can further indicate that it can be directly used by the UE 602, or indicates that the UE 602 can use it for partial sensing, where the UE 602 selects a transmission resource by performing a partial sensing procedure using parameters included in the assistance resource selection information. The assistance resource selection information can also indicate that it can not be directly used by the UE 602, and if so, the UE 602 selects an intersection transmission resource between transmission resources determined by sensing results based on the assistance resource selection information and sensing results from the UE 602.

In an embodiment, the assistance resource selection information includes a set of candidate resources that be used by the UE 602, the UE 602 selects intersection transmission resources between transmission resources provided by the assistance resource selection information and the UE 602's own sensing results. In an embodiment, the UE 602 selects transmission resources based on the UE 602's own sensing resource if the assistance resource selection information includes a set of candidate resources that can be used by the UE 602.

The UE 602 can also exclude a transmission resource from the selected transmission resources in the set of candidate resources provided by the assistance resource selection information. In yet another embodiment, the assistance resource selection information includes a restriction of information of a specific priority, or a logical channel, or a DRB, or a destination, wherein the restriction of information indicates whether the specific priority, logical channel, DRB, or destination can or cannot be used, and, in an embodiment, the a logical channel can only be used if it has the specific priority, logical channel, DRB, or destination. In an embodiment, the grant can only be used or not be used by the logical channel that is configured to use the resource pool indicated in the restriction of information. In an embodiment, the grant can only be used or not be used by a logical channel if a CBR of the allowed resource pool of the logical channel is indicated in the information.

In yet another embodiment, the UE 602 can report the assistance resource selection capability 606 of the UE 604 to a base station 608. In another embodiment, the assistance resource selection configuration can come from the base station, wherein the logical channel with a specific priority, logical channel, DRB, destination, resource pool, or CBR is allowed to use the assistance resource selection configuration. In yet another embodiment, the grant can only be used by a logical channel with the indicated priority, logical channel, DRB, or destination. In yet another embodiment, the grant can only be used by a logical channel that is configured to use the resource pool indicated in the information.

In yet another embodiment, the resource selection capability is of UE602 is reported to a base station, and a logical channel with a specific priority, logical channel, DRB, destination, resource pool, or CBR is allowed to use the assistance resource selection configuration. In an embodiment, the UE 602 selects a unicast, a groupcast, or broadcast destination having a logical channel with the highest priority or the highest MAC CE that are allowed to use a grant of resources.

As can be understood, some parameters need to be configured for one UE for another UE to provide assistance resource selection configuration to the other UE. The assistance resource selection configuration is used by one UE to configure the selection of responses.

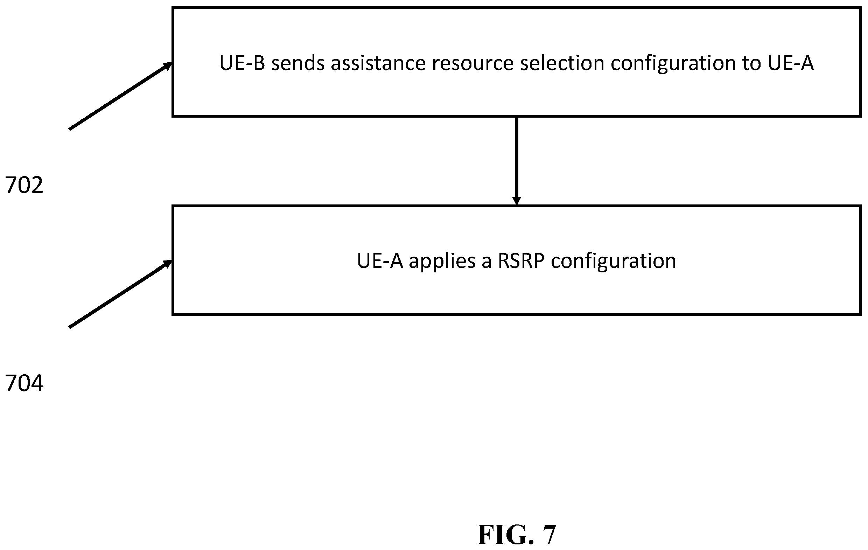

As illustrated in Fig. 7, as a first step, UE-B sends an assistance resource selection configuration to UE-A, and this includes an RSRP configuration that has: RSRP configuration, RSRP threshold, an indication of an increasing RSRP by RSRP-step, an indication of decreasing RSRP by RSRP-step, RSRP-step size, a percentage of candidate single-slot resources remaining in the candidate resource set. In an embodiment, the RSRP configuration is configured per priority.

As a second step, the UE-A applies the RSRP configuration, which includes applying a new RSRP threshold, new RSRP-step size, increasing a RSRP threshold by RSRP-step in RSRP configuration, decreasing a RSRP threshold by RSRP-step in RSRP configuration, applying a new Percentage of candidate single-slot resources remaining in the candidate resource set.

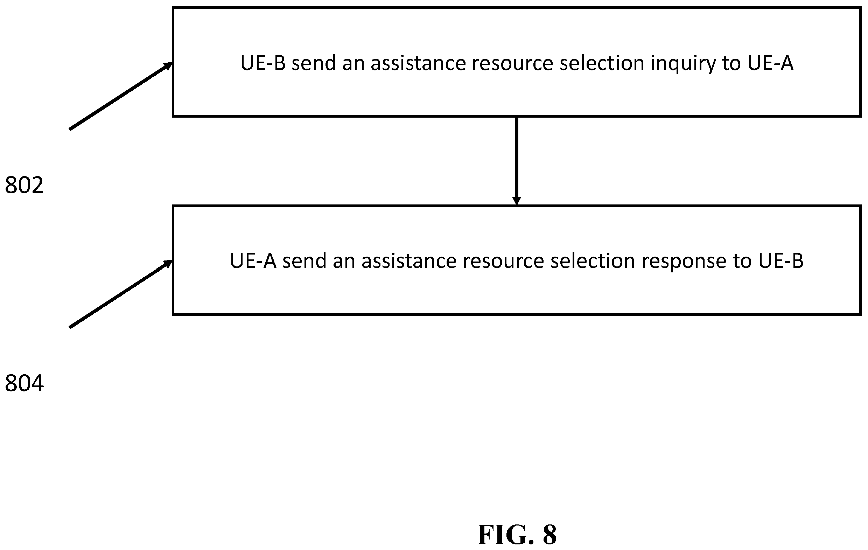

As illustrated in Fig. 8, in step 802 UE-B send an assistance resource selection inquiry to UE-A. In step 804, UE-A send an assistance resource selection response to UE-B. In an embodiment, the inquiry can provide information regarding whether UE-A can provide assistance resource selection information for itself, or whether UE-A can provide assistance resource selection information for another UE. In an embodiment, UE already established a unicast/groupcast/broadcast connection with UE-B. In another embodiment, the that does not establish any PC5 connection with UE-B.

In an embodiment, the response can indicate whether UE-A can provide assistance resource selection information for itself, or whether UE-A can provide assistance resource selection information for another UE.

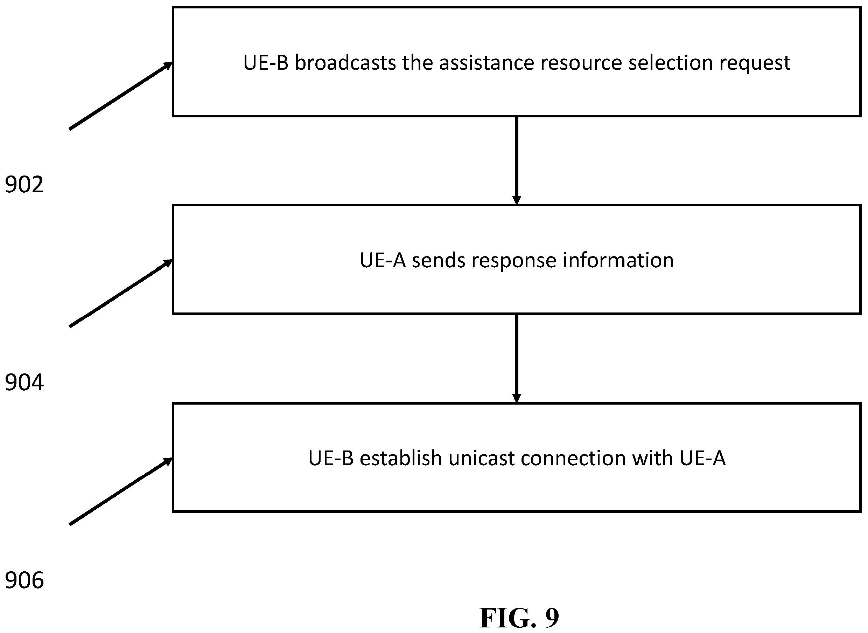

Fig. 9 illustrates a flowchart for a search of UE-A, where UE-B searches for a UE-A to provide assistance resource selection information. UE-B conducts a broadcast of an inquiry. In step 902, UE-B broadcasts the assistance resource selection request. In step 904, UE-A send response information. In step 906, UE-B establishes a unicast connection with UE-A

In an embodiment, UE-B groupcasts an assistance resource selection request within all UE-B's group In another embodiment, UE-B first checks whether a UE has a unicast link with of UE-B that is capable of providing assistance resource selection measurement. If not, UE-B groupcasts an assistance resource selection measurement request within all UE-B's group, and if no response is received, the, UE-B broadcast the request.

In another embodiment, the assistance resource selection request include one of: an indication of providing assistance resource selection for all UE-B's traffic

In an embodiment, the response information shown in step 904 includes any one of: an indication of providing assistance resource selection for all UE-B's traffic, destination layer 2 ID of UE-A for unicast link, a resource selection mode: sensing/partial sensing, or coverage states: in coverage, out of coverage, or RRC states: RRC connection, RRC idle, RRC inactive.

In an embodiment, UE-B may receive multiple response message from UEs because it broadcasts its request. In this instance, the UE-B can choose one UE-A to establish a connection with. In an embodiment, the chosen UE shall be prioritised to be chosen in accordance with the following order (highest priority listed first): RRC connection, RRC inactive, or RRC idle. In another embodiment, UE-A shall be prioritised to be chosen in accordance with the following order (highest priority listed first): sensing, partial sensing. In another embodiment, UE-A shall be prioritised to be chosen in accordance with the following order (highest priority listed first): in coverage, out of coverage. In another embodiment, UE-A shall be prioritised to be chosen in accordance with the following order (highest priority listed first): header UE within same group with UE-B, UE-A within same group with UE-B, UE-A without any unicast or groupcast link connection with UE-B. In another embodiment, UE-B randomly selects one UE-A to establish unicast connection.

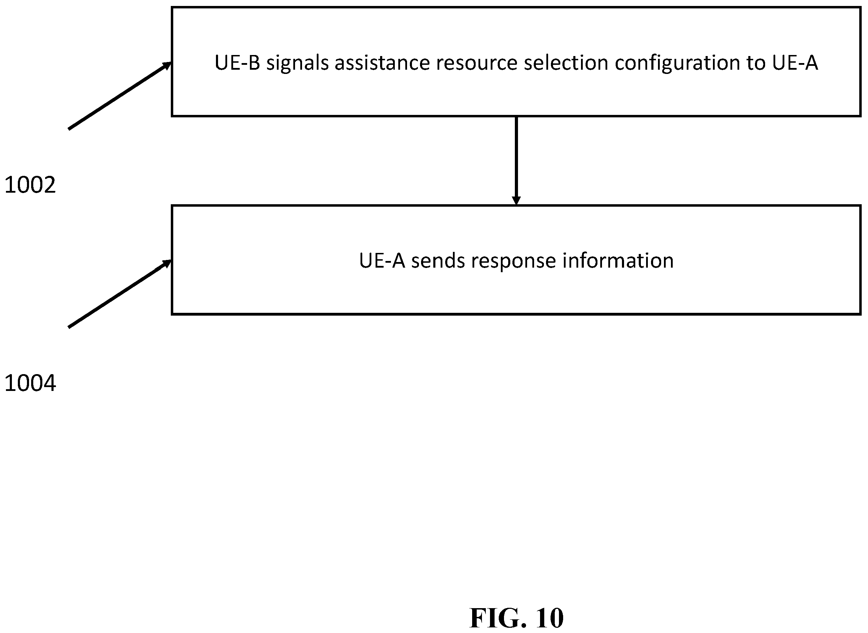

Fig. 10 illustrates signaling a resource configuration between devices, where UE-B signals a measurement configuration to UE-A, and UE-A reports measurement results including SCI that is received by the UE-A and RSRP Measurement result to assist resource selection of UE-B. In step 1002, UE-B signals assistance resource selection configuration to UE-A. This includes measurement configurations. In step 1004, UE-A reports measurement results.

In one embodiment, the assistance resource selection configuration may be configured: per destination, Per priority, Per resource pool, Per CBR, Per logical channel, Per CBR. In an embodiment, the assistance resource selection may include any of the following: measurement object, report configuration, assistance resource selection information (measurement results), Sensing parameters. In a further embodiment, sensing parameters may include one of following factors, all these parameters are used for UE-A sensing: the value of SL_RESOURCE_RESELECTION_COUNTER, the number of sub-channels, the resource reservation interval, the Service Priority, the pre-emption priority, an indication of whether the pre-emption is enabled or disabled, packet Delay Budget, HARQ feedback configuration (which indicates whether UE-A need sensing resource pool with PSFCH resource), a sensing window, defined by a timer interval, a candidate Resource selection window defined by a timer interval, a bit map of slot in candidate Resource selection window that UE-A need to sensing (for partial sensing), allowed resource reservation period, a RSRP threshold, a reference signal: PSSCH-RSRP or PSCCH-RSRP, a percentage of candidate single-slot resources remaining in the candidate resource set, a step of RSRP-threshold increment.

In another embodiment, the timer interval comprises: T1, T2, time interval is [T1,T2], where select T1,T2 from a range of [minT1, maxT1] and [minT2, maxT2] respectively, and the window is defined by a time interval [T1, T2]. In another embodiment, sensing parameters are configured per service priority.

In another embodiment, the measurement object can have any of the resource pool configuration, resource pool ID, or frequency.

In an embodiment, the report configuration can have (event : measurement result has changed) according to the following events.

As an option, event : "Resource reservation period" received in SCI changed in a single slot occupied by another resource reservation period received previously
As an option, event : "Priority" received in SCI changed in a single slot occupied by another resource reservation period received previously.
As an option, event:the number of single-slot resource in a set of candidate resources changed
As an option, event: the slot number of single-slot resource in a set of candidate resources changed

As an option, event : RSRP measurement result of one single-slot resource in Resource selection window changed.

In an embodiment, the report configuration can have (event :measurement result higher than a configured threshold) according to the following events.

As an option, event : RSRP measurement result of one single-slot resource in Resource selection window is higher than configured threshold
As an option, event : "Resource reservation period" received in SCI of single-slot is higher than a configured threshold.

As an option, event: "Priority" received in SCI of single-slot is higher than a configured threshold.
As an option, event:the number of single-slot resource in a set of candidate resources is higher than a configured threshold
As an option, event: the number of new available single-slot resource in a set of candidate resources is higher than a configured threshold

As an option, event: the number of available single-slot resource that becomes unavailable in a set of candidate resources is higher than a configured threshold.

In an embodiment, the report configuration can have (event :measurement result lower than a configured threshold) according to the following events.

As an option, event : RSRP measurement result of one single-slot resource in Resource selection window is lower than configured threshold
As an option, event :"Resource reservation period" received in SCI of same single-slot is lower than a configured threshold.

As an option, event: "Priority" received in SCI of same single-slot is lower than a configured threshold.
As an option, event:the number of single-slot resource in a set of candidate resources is higher than a configured threshold
As an option, event: the number of new available single-slot resource in a set of candidate resources is lower than a configured threshold

As an option, event: the number of available single-slot resource that becomes unavailable in a set of candidate resources is lower than a configured threshold.
In an embodiment, the report configuration can have (periodical report)
As an option, periodical report: periodical report RSRP measurement results of one single-slot resource in Resource selection window and the slot of SCI
As an option, periodical report: periodical report "Resource reservation period" included in SCI received in a specific single-slot
As an option, periodical report: periodical report "Priority" included in SCI received in a specific single-slot
As an option, slot that UE receive "resource reservation period" or "Priority"
As an option, periodical report: periodical report a set of candidate resources
As an option, purpose: assistance resource selection

In further embodiment, every event in report configuration include one of following event configuration: threshold, Indicates whether or not the UE shall initiate the measurement reporting procedure when the leaving condition is met, hysteresis value, timeToTrigger:Time during which specific criteria for the event needs to be met in order to trigger a measurement report, reportInterval:indicates the interval between periodical reports, reportAmount:Number of measurement reports, reportQuantity: which factors in measurement results should be reported.

In another embodiment, perdical report include one of following perdical report configurations: reportInterval:indicates the interval between periodical reports, reportAmount:Number of measurement reports, reportQuantity: which factors in measurement results should be reported.
In another embodiment, report configuration can be configured: Per UE-A, Per Destination. Per priority of logical channel, Per logical channel, Per CBR, Per resource pool, Per resource reserved period
In another embodiment, the assistance resource selection information (measurement results) include one of:
   As an option, index of slot in sensing window determined by sensing parameters that the UE has not monitored.

As an option, "Resource reservation period" included in SCI received in a specific single-slot.

As an option, "Priority" included in SCI received in a specific single-slot.

As an option, slot that UE receive "resource reservation period" or "Priority."

As an option, RSRP measurement result of single-slot resource in Resource selection window, and the position of slot in resource pool..

RSRP threshold during UE-A sensing.

As an option, a set of candidate resource that can be used by UE-B.

As an option, a set of candidate resource that can not be used by UE-B.

In another embodiment, assistance resource selection information may further include one of:
Whether information can be directly used by UE-B. Or the candidate resource needs to be further selecting by UE-B self.

Whether information can be used by UE-B via one of: random selection, sensing, partial sensing.

Whether there is a restriction of the information, which means, the information can be used or not be used for a specific priority/logical channel/DRB/destination/resource pool/CBR.

In another embodiment, If one of event or periodical report is configured and triggered or explicity indicated by UE-B, UE-A reports assistance resource selection information (measurement results) to UE-B according to report configuration.

In an embodiment, the indication from UE-B is used to indicate UE-A provide assistance resource selection information for one of following: a Destination, a priority of logical channel, a logical channel, a resource pool, a resource reserved period.

In another embodiment, UE-A reports assistance resource selection information, assistance resource selection information, destination layer2 ID of UE-A configuration to UE-A's base station. In further embodiment, UE-A receives assistance resource information from UE-A's base station.

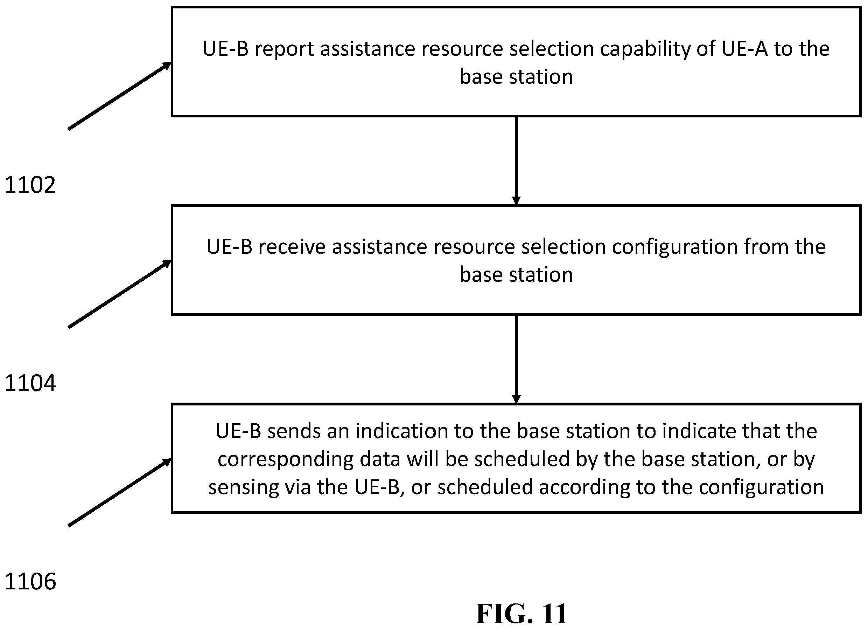

Fig. 11 illustrates the receipt of a configuration from a base station. In step 1102, UE-B report assistance resource selection capability of UE-A to the base station. In step 1104, UE-B receive assistance resource selection configuration from the base station. In step 1106, UE-B sends an indication to the base station to indicate that the corresponding data will be scheduled by the base station, or by sensing via the UE-B, or scheduled according to the configuration
In an embodiment, the configuration includes:
Whether UE-B's traffic will be scheduled by base station for the case that no UE-A is capable of providing assistance resource selection.

Whether UE-B's traffic will be sensed by itself for the case no UE-A capable of providing assistance resource selection was found.

Whether UE-B's traffic will sense by itself by taking assistance resource selection from UE-A into consideration.
In another embodiment, the configuration will be: per priority/logical channel/per DRB/destination, and indicate whether transmission resource of UE-B's traffic with specified priority/logical channel/per DRB/destination will be scheduled by base station or sensing by UE-B self or sensing by taking assistance resource selection from UE-A into consideration
In another embodiment, the configuration will be: per CBR: indicate whether the UE-B's traffic will be scheduled by base station or sensing by UE-B self or sensing by taking assistance resource selection from UE-A into consideration
In another embodiment, the configuration will be: per resource pool: indicate whether the resource pool supports: UE-B's traffic be scheduled by base station or sensing by UE-B self or sensing by taking assistance resource selection from UE-A into consideration

In another embodiment, it is up to the UE-B to choose grants, taking into consideration (or not) information it receives.

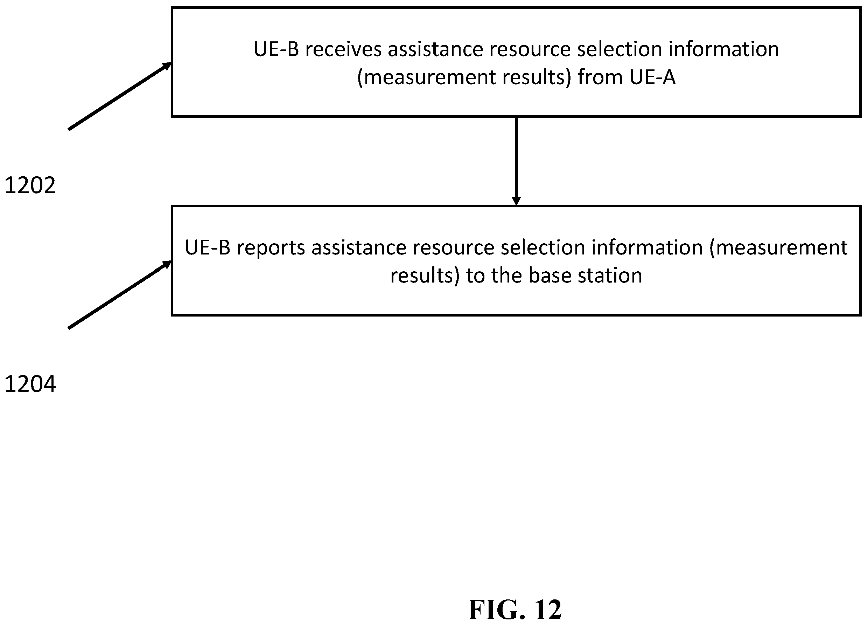

Fig. 12 illustrates a report to a base station. In step 1202, UE-B receives assistance resource selection information (measurement results) from UE-A. In step 1204, UE-B reports assistance resource selection information (measurement results) to the base station. In another embodiment, UE-B also reports the destination layer2ID of UE-A to the base station.

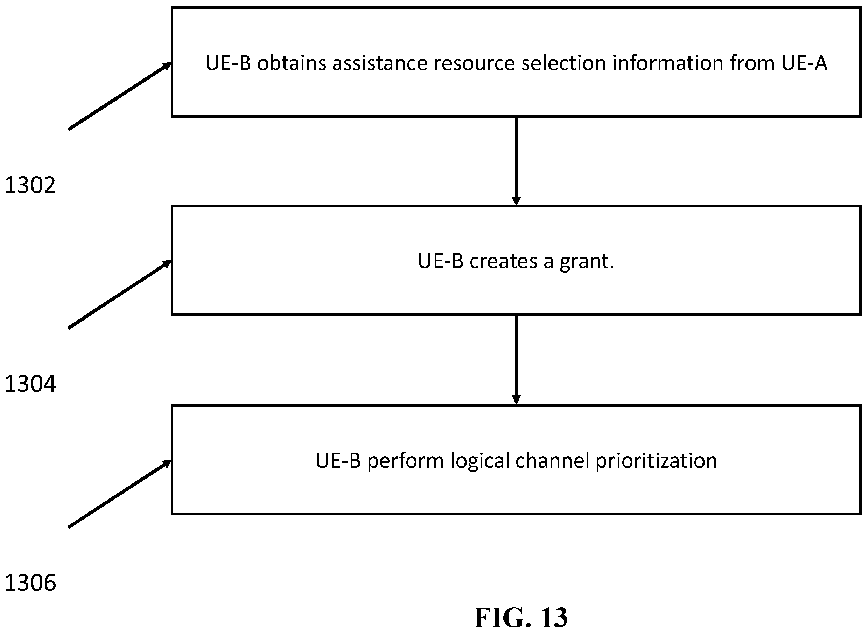

Fig. 13 illustrates a creation of a grant. In step 1302, UE-B obtains assistance resource selection information from UE-A. In step 1304, UE-B creates a grant. In step 1306, UE-B perform logical channel prioritization.

In one embodiment, the assistance resource selection information includes one of As an option, index of slot in sensing window determined by sensing parameters that the UE has not monitored
As an option, "Resource reservation period" received in SCI, and the index of slot in which UE-A receive in resource pool
As an option, "Priority" received in SCI, and the index of slot in which UE-A receive SCI in resource pool
As an option, RSRP measurement result of single-slot resource in Resource selection window, and the position of slot in resource pool.

In an embodiment, if assistance resource selection information indicates the information can be directly used by UE-B or indicate UE-B can use the information by sensing, UE-B selects transmission resources by performing sensing procedure using parameters included in the assistance resource selection information, and UE-B creates a grant using the selected transmission resources.

In an embodiment, if assistance resource selection information indicate the information can be directly used by UE-B or indicate UE-B can use the information by partial sensing, UE-B select transmission resources by performing partial sensing procedure using parameters included in the assistance resource selection information, and UE-B create grant using the selected transmission resources.

In an embodiment, if assistance resource selection information indicate the information can not be directly used by UE-B, UE-B select intersection transmission resources between transmission resources determined by sensing results based on the assistance resource selection information and it's own sensing results, UE-B create grant using the intersection transmission resources.

In an embodiment, if the assistance resource selection information includes a set of candidate resource that can be used by UE-B, UE-B select intersection transmission resources between transmission resources provided by assistance resource selection information and it's own sensing results, UE-B creates a grant using the intersection transmission resources.

In an embodiment, if the assistance resource selection information include a set of candidate resources that can be used by UE-B, UE-B select transmission resources based on it's own sensing results, and UE-B excludes transmission resource from selected transmission resources in a set of candidate resource provided by assistance resource selection information, then UE-B create grant using the remaining transmission resources.

In a further embodiment, if the assistance resource selection information includes a restriction of the information: the information can only be used or not be used for a specific priority/logical channel/DRB/destination/resource pool/CBR, then the grant can only be used or not be used by logical channel with indicated priority/logical channel/DRB/destination. In another embodiment, the grant can only be used or not be used by logical channel which is configured to use the resource pool indicated in the information. In another embodiment, the grant can only be used or not be used by logical channel if CBR of allowed resource pool of logical channel is indicated in the information

In another embodiment, if the logical channel with specific priority/logical channel/DRB/destination/resource pool/CBR is allowed to use the information from UE-A according to configuration as described in the embodiments disclosed in this disclosure. In another embodiment, the grant can only be used by logical channel with indicated priority/logical channel/DRB/destination. In another embodiment, thee grant can only be used by logical channel which is configured to use the resource pool indicated in the information. In another embodiment, the grant can only be used by logical channel if CBR of allowed resource pool of logical channel is indicated in the information

In an embodiment, step 1306 includes selecting a destination associated to one of unicast, groupcast and broadcast, having the logical channel with the highest priority or the MAC CE, among the logical channels that satisfy all the following conditions and MAC CE(s), if any, for the grant associated to the SCI, they are allowed to use the grant as describe in step 1304. In an embodiment, the logical channels are selected all satisfying all the conditions among the logical channels belonging to the selected destination are allowed to use the grant as described in step 1304.

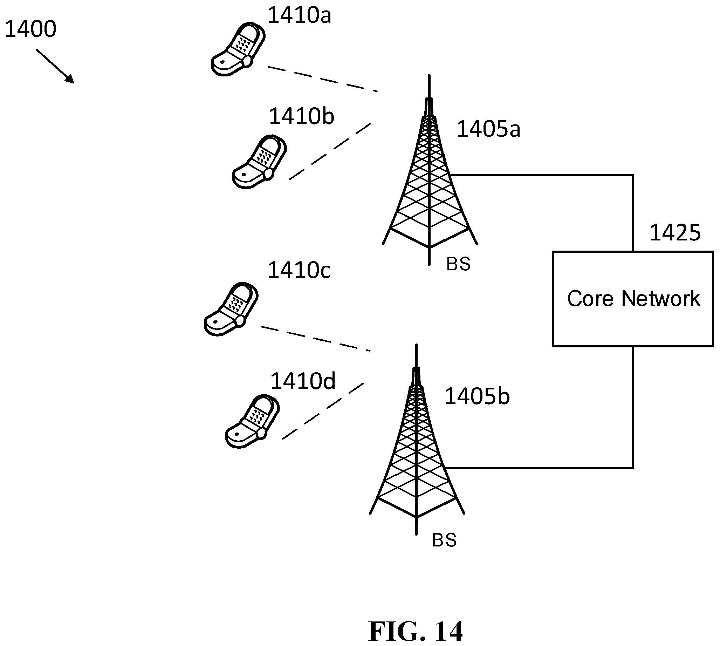

FIG. 14 shows an example of a wireless communication system 1400 where techniques in accordance with one or more embodiments of the present technology can be applied. A wireless communication system 1400 can include one or more base stations (BSs) 1405a, 1405b, one or more wireless devices 1410a, 1410b, 1410c, 1410d, and a core network 1425. A base station 1405a, 1405b can provide wireless service to wireless devices 1410a, 1410b, 1410c and 1410d in one or more wireless sectors. In some implementations, a base station 1405a, 1405b includes directional antennas to produce two or more directional beams to provide wireless coverage in different sectors.

The core network 1425 can communicate with one or more base stations 1405a, 1405b. The core network 1425 provides connectivity with other wireless communication systems and wired communication systems. The core network may include one or more service subscription databases to store information related to the subscribed wireless devices 1410a, 1410b, 1410c, and 1410d. A first base station 1405a can provide wireless service based on a first radio access technology, whereas a second base station 1405b can provide wireless service based on a second radio access technology. The base stations 1405a and 1405b may be co-located or may be separately installed in the field according to the deployment scenario. The wireless devices 1410a, 1410b, 1410c, and 1410d can support multiple different radio access technologies. The techniques and embodiments described in the present document may be implemented by the base stations of wireless devices described in the present document.

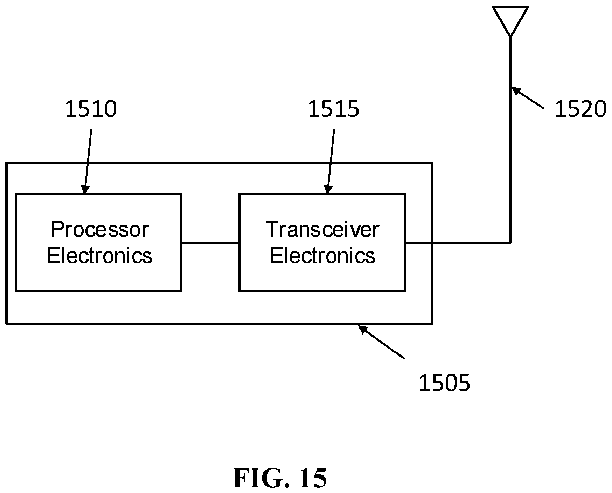

FIG. 15 is a block diagram representation of a portion of a radio station in accordance with one or more embodiments of the present technology can be applied. A radio station 1505 such as a base station or a wireless device (or UE) or MT can include processor electronics 1510 such as a microprocessor that implements one or more of the wireless techniques presented in this document. The radio station 1505 can include transceiver electronics 1515 to send and/or receive wireless signals over one or more communication interfaces such as antenna 1520. The radio station 1505 can include other communication interfaces for transmitting and receiving data. Radio station 1505 can include one or more memories (not explicitly shown) configured to store information such as data and/or instructions. In some implementations, the processor electronics 1510 can include at least a portion of the transceiver electronics 1515. In some embodiments, at least some of the disclosed techniques, modules or functions are implemented using the radio station 1505. In some embodiments, the radio station 1505 may be configured to perform the methods described herein.

It will be appreciated that the present document discloses techniques that can be embodied in various embodiments and configurations. It should be understood that concepts from some embodiments can be used for other embodiments. The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

## Claims

1. An information transmission method comprising:
transmitting, from a first wireless device (1505), information relating to an assistance resource selection configuration to a second wireless device, wherein the assistance resource selection configuration comprises a candidate resource selection window defined by a timer interval, the timer interval is determined based on a value T1 and a value T2, wherein T1 and T2 are selected from a range of [minT1, maxT1] and [minT2, maxT2], the assistance resource selection configuration further comprises a number of sub-channels or a resource reservation interval or a Service Priority;
receiving, at the first wireless device (1505), assistance resource selection information from a second wireless device, wherein the assistance resource selection information comprises a set of candidate resources that can be used by the first wireless device (1505);
selecting, at the first wireless device (1505), intersection transmission resources between transmission resources provided by the assistance resource selection information and the first wireless device's own sensing results; and
performing, at the first wireless device (1505), prioritization on a logical channel.

2. The method according to claim 1, wherein the assistance resource selection configuration comprises one of: a) whether the assistance resource selection information can be directly used by the first wireless device (1505) or whether the candidate resource needs to be further selected by the first wireless device (1505), or b) whether the assistance resource selection information can be used by the first wireless device (1505) via one of random selection or sensing or partial sensing, or c) whether the assistance resource selection information can be used for a specific priority, or logical channel, or Data Radio Bearer, DRB, or destination, or resource pool, or Channel Busy Ratio, CBR.

3. The method according to claim 1, where the assistance resource selection information is measurement results.

4. The method according to claim 1, wherein the assistance resource selection configuration includes an event trigger.

5. The method according to claim 1, further comprising:
creating, at the first wireless device (1505), a grant of resources based at least in part on the assistance resource selection information.

6. A first wireless device (1505) for information transmission, comprising:
a memory operable to store computer-readable instructions; and
a processor circuitry (1510) operable to read the computer-readable instructions, the processor circuitry (1510) when executing the computer-readable instructions is configured to:
transmit information relating to an assistance resource selection configuration to a second wireless device, wherein the assistance resource selection configuration comprises a candidate resource selection window defined by a timer interval, the timer interval is determined based on a value T1 and a value T2, wherein T1 and T2 are selected from a range of [minT1, maxT1] and [minT2, maxT2], the assistance resource selection configuration further comprises a number of sub-channels or a resource reservation interval or a Service Priority;
receive assistance resource selection information from the second wireless device, wherein the assistance resource selection information comprises a set of candidate resources that can be used by the wireless device;
select intersection transmission resources between transmission resources provided by the assistance resource selection information and the first wireless device's own sensing results; and
perform prioritization on a logical channel.

7. The first wireless device (1505) according to claim 6, wherein the processor circuitry (1510) when executing the computer-readable instructions is configured to carry out the method according to any of claims 2 to 5.

8. A non-transitory machine-readable media, having instructions stored on the machine-readable media, the instructions configured to, when executed, cause a machine to:
transmit information relating to an assistance resource selection configuration from a first wireless device (1505) to a second wireless device, wherein the assistance resource selection configuration comprises a candidate resource selection window defined by a timer interval, the timer interval is determined based on a value T1 and a value T2, wherein T1 and T2 are selected from a range of [minT1, maxT1] and [minT2, maxT2], the assistance resource selection configuration further comprises a number of sub-channels or a resource reservation interval or a Service Priority;
receive assistance resource selection information from a second wireless device, wherein the assistance resource selection information comprises a set of candidate resources that can be used by the first wireless device (1505);
select intersection transmission resources between transmission resources provided by the assistance resource selection information and the first wireless device's own sensing results; and
perform prioritization on a logical channel.

9. The non-transitory machine-readable media according to claim 8, wherein the instructions are configured to, when executed, cause the machine to carry out the method according to any of claims 2 to 5.

## Patentansprüche

1. Informationsübertragungsverfahren, aufweisend:
Übertragen, von einer ersten drahtlosen Vorrichtung (1505), von Information in Bezug auf eine Hilfsressourcen-Auswahlkonfiguration an eine zweite drahtlose Vorrichtung, wobei die Hilfsressourcen-Auswahlkonfiguration ein Auswahlfenster für in Frage kommende Ressourcen aufweist, das durch ein Zeitgeberintervall definiert ist, wobei das Zeitgeberintervall basierend auf einem Wert T1 und einem Wert T2 bestimmt wird, wobei T1 und T2 aus einem Bereich von [minT1, maxT1] und [minT2, maxT2] ausgewählt sind, die Hilfsressourcen-Auswahlkonfiguration ferner eine Anzahl von Unterkanälen oder ein Ressourcen-Reservierungsintervall oder eine Dienstpriorität aufweist;
Empfangen, an der ersten drahtlosen Vorrichtung (1505), von Hilfsressourcen-Auswahlinformation von einer zweiten drahtlosen Vorrichtung, wobei die Hilfsressourcen-Auswahlinformation einen Satz in Frage kommender Ressourcen aufweist, die von der ersten drahtlosen Vorrichtung (1505) verwendet werden können;
Auswählen, an der ersten drahtlosen Vorrichtung (1505), der Schnittmengenübertragungsressourcen zwischen der durch die Hilfsressourcen-Auswahlinformation bereitgestellten Übertragungsressourcen und den eigenen Erfassungsergebnissen der ersten drahtlosen Vorrichtung; und
Durchführen, an der ersten drahtlosen Vorrichtung (1505), einer Priorisierung auf einem logischen Kanal.

2. Verfahren nach Anspruch 1, wobei die Hilfsressourcen-Auswahlkonfiguration eines aufweist von: a) ob die Hilfsressourcen-Auswahlinformation von der ersten drahtlosen Vorrichtung (1505) direkt verwendet werden können oder ob die in Frage kommende Ressource durch die erste drahtlose Vorrichtung (1505) noch weiter ausgewählt werden muss oder b) ob die Hilfsressourcen-Auswahlinformation durch die erste drahtlose Vorrichtung (1505) mittels einer von zufälliger Auswahl oder Erfassung oder Teilerfassung verwendet werden können oder c) ob die Hilfsressourcen-Auswahlinformation für eine spezifische Priorität oder einen logischen Kanal oder einen Datenfunkträger (DRB) oder ein Ziel oder einen Ressourcen-Pool oder ein Kanalbelegungsverhältnis (CBR) verwendet werden kann.

3. Verfahren nach Anspruch 1, wobei die Hilfsressourcen-Auswahlinformation Messergebnisse sind.

4. Verfahren nach Anspruch 1, wobei die Hilfsressourcen-Auswahlkonfiguration einen Ereignisauslöser einschließt.

5. Verfahren nach Anspruch 1, ferner aufweisend:
Erzeugen, an der ersten drahtlosen Vorrichtung (1505), einer Ressourcen-Zuweisung basierend, zumindest teilweise, auf den Hilfsressourcen-Auswahlinformationen.

6. Erste drahtlose Vorrichtung (1505) zur Informationsübertragung, aufweisend:
einen Speicher, der betriebsfähig ist, um computerlesbare Anweisungen zu speichern; und
eine Prozessorschaltungsanordnung (1510), die betriebsfähig ist, um die computerlesbaren Anweisungen zu lesen, wobei die Prozessorschaltungsanordnung (1510) bei Ausführung der computerlesbaren Anweisungen konfiguriert wird zum:
Übertragen von Information in Bezug auf eine Hilfsressourcen-Auswahlkonfiguration an eine zweite drahtlose Vorrichtung, wobei die Hilfsressourcen-Auswahlkonfiguration ein Auswahlfenster für in Frage kommende Ressourcen aufweist, das durch ein Zeitgeberintervall definiert ist, das Zeitgeberintervall basierend auf einem Wert T1 und einem Wert T2 bestimmt wird, wobei T1 und T2 aus einem Bereich von [minT1, maxT1] und [minT2, maxT2] ausgewählt sind, die Hilfsressourcen-Auswahlkonfiguration ferner eine Anzahl von Unterkanälen oder ein Ressourcen-Reservierungsintervall oder eine Dienstpriorität aufweist;
Empfangen von Hilfsressourcen-Auswahlinformation von der zweiten drahtlosen Vorrichtung, wobei die Hilfsressourcen-Auswahlinformation einen Satz in Frage kommender Ressourcen aufweisen, die von der drahtlosen Vorrichtung verwendet werden können;
Auswählen der Schnittmengenübertragungsressourcen zwischen den durch die Hilfsressourcen-Auswahlinformation bereitgestellten Übertragungsressourcen und den eigenen Erfassungsergebnissen der ersten drahtlosen Vorrichtung; und
Durchführen der Priorisierung auf einem logischen Kanal.

7. Erste drahtlose Vorrichtung (1505) nach Anspruch 6, wobei die Prozessorschaltungsanordnung (1510) bei Ausführung der computerlesbaren Anweisungen konfiguriert wird, um das Verfahren nach einem der Ansprüche 2 bis 5 durchzuführen.

8. Nichtflüchtiges maschinenlesbares Medium, das Anweisungen auf dem maschinenlesbaren Medium gespeichert aufweist, wobei die Anweisungen konfiguriert sind, um bei Ausführung eine Maschine zu veranlassen zum:
Übertragen von Information in Bezug auf eine Hilfsressourcen-Auswahlkonfiguration von einer ersten drahtlosen Vorrichtung (1505) an eine zweite drahtlose Vorrichtung, wobei die Hilfsressourcen-Auswahlkonfiguration ein Auswahlfenster für in Frage kommende Ressourcen aufweist, das durch ein Zeitgeberintervall definiert ist, das Zeitgeberintervall basierend auf einem Wert T1 und einem Wert T2 bestimmt wird, wobei T1 und T2 aus einem Bereich von [minT1, maxT1] und [minT2, maxT2] ausgewählt sind, die Hilfsressourcen-Auswahlkonfiguration ferner eine Anzahl von Unterkanälen oder ein Ressourcen-Reservierungsintervall oder eine Dienstpriorität aufweist;
Empfangen von Hilfsressourcen-Auswahlinformation von einer zweiten drahtlosen Vorrichtung, wobei die Hilfsressourcen-Auswahlinformation einen Satz in Frage kommender Ressourcen aufweisen, die von der ersten drahtlosen Vorrichtung (1505) verwendet werden können;
Auswählen der Schnittmengenübertragungsressourcen zwischen den durch die Hilfsressourcen-Auswahlinformation bereitgestellten Übertragungsressourcen und den eigenen Erfassungsergebnissen der ersten drahtlosen Vorrichtung; und
Durchführen der Priorisierung auf einem logischen Kanal.

9. Nichtflüchtiges maschinenlesbares Medium nach Anspruch 8, wobei die Anweisungen konfiguriert sind, um bei Ausführung die Maschine zu veranlassen, das Verfahren nach einem der Ansprüche 2 bis 5 durchzuführen.

## Revendications

1. Procédé de transmission d'informations comprenant :
la transmission, à partir d'un premier dispositif sans fil (1505), d'informations relatives à une configuration de sélection de ressources d'assistance à un second dispositif sans fil, dans lequel la configuration de sélection de ressources d'assistance comprend une fenêtre de sélection de ressources candidates définie par un intervalle de temporisateur, l'intervalle de temporisateur est déterminé sur la base d'une valeur T1 et d'une valeur T2, dans lequel T1 et T2 sont sélectionnées dans une plage de [minT1, maxT1] et [minT2, maxT2], la configuration de sélection de ressources d'assistance comprend en outre un nombre de sous-canaux ou un intervalle de réservation de ressources ou une priorité de service ;
la réception, au niveau du premier dispositif sans fil (1505), d'informations de sélection de ressources d'assistance en provenance d'un second dispositif sans fil, dans lequel les informations de sélection de ressources d'assistance comprennent un ensemble de ressources candidates qui peuvent être utilisées par le premier dispositif sans fil (1505) ;
la sélection, au niveau du premier dispositif sans fil (1505), de ressources de transmission d'intersection entre des ressources de transmission fournies par les informations de sélection de ressources d'assistance et les propres résultats de détection du premier dispositif sans fil ; et
la réalisation, au niveau du premier dispositif sans fil (1505), d'une priorisation sur un canal logique.

2. Procédé selon la revendication 1, dans lequel la configuration de sélection de ressources d'assistance comprend l'un parmi : a) si les informations de sélection de ressources d'assistance peuvent être directement utilisées par le premier dispositif sans fil (1505) ou si la ressource candidate doit être en outre sélectionnée par le premier dispositif sans fil (1505), ou b) si les informations de sélection de ressources d'assistance peuvent être utilisées par le premier dispositif sans fil (1505) par l'intermédiaire de l'une parmi une sélection aléatoire ou une détection ou une détection partielle, ou c) si les informations de sélection de ressources d'assistance peuvent être utilisées pour une priorité spécifique, ou un canal logique, ou un support radio de données, DRB, ou une destination, ou un groupe de ressources, ou un taux d'occupation de canal, CBR.

3. Procédé selon la revendication 1, dans lequel les informations de sélection de ressources d'assistance sont des résultats de mesure.

4. Procédé selon la revendication 1, dans lequel la configuration de sélection de ressources d'assistance comporte un déclencheur d'événement.

5. Procédé selon la revendication 1, comprenant en outre :
la création, au niveau du premier dispositif sans fil (1505), d'un octroi de ressources sur la base d'au moins en partie sur les informations de sélection de ressources d'assistance.

6. Premier dispositif sans fil (1505) pour la transmission d'informations, comprenant :
une mémoire capable de stocker des instructions lisibles par ordinateur ; et
une circuiterie de processeur (1510) capable de lire les instructions lisibles par ordinateur, la circuiterie de processeur (1510), lors de l'exécution des instructions lisibles par ordinateur, est configurée pour :
transmettre des informations relatives à une configuration de sélection de ressources d'assistance à un second dispositif sans fil, dans lequel la configuration de sélection de ressources d'assistance comprend une fenêtre de sélection de ressources candidates définie par un intervalle de temporisateur, l'intervalle de temporisateur est déterminé sur la base d'une valeur T1 et d'une valeur T2, dans lequel T1 et T2 sont sélectionnées dans une plage de [minT1, maxT1] et [minT2, maxT2], la configuration de sélection de ressources d'assistance comprend en outre un nombre de sous-canaux ou un intervalle de réservation de ressources ou une priorité de service ;
recevoir des informations de sélection de ressources d'assistance en provenance du second dispositif sans fil, dans lequel les informations de sélection de ressources d'assistance comprennent un ensemble de ressources candidates qui peuvent être utilisées par le dispositif sans fil ;
sélectionner des ressources de transmission d'intersection entre des ressources de transmission fournies par les informations de sélection de ressources d'assistance et les propres résultats de détection du premier dispositif sans fil : et
réaliser une priorisation sur un canal logique.

7. Premier dispositif sans fil (1505) selon la revendication 6, dans lequel la circuiterie de processeur (1510) lors de l'exécution des instructions lisibles par un ordinateur est configurée pour mettre en œuvre le procédé selon l'une quelconque des revendications 2 à 5.

8. Support non transitoire lisible par machine, ayant des instructions stockées sur le support lisible par machine, les instructions étant configurées pour, lorsqu'elles sont exécutées, amener une machine à :
transmettre des informations relatives à une configuration de sélection de ressources d'assistance d'un premier dispositif sans fil (1505) à un second dispositif sans fil, dans lequel la configuration de sélection de ressources d'assistance comprend une fenêtre de sélection de ressources candidates définie par un intervalle de temporisation, l'intervalle de temporisation est déterminé sur la base d'une valeur T1 et d'une valeur T2, dans lequel T1 et T2 sont sélectionnés dans une plage de [minT1, maxT1] et [minT2, maxT2], la configuration de sélection de ressources d'assistance comprend en outre un nombre de sous-canaux ou un intervalle de réservation de ressources ou une priorité de service ;
recevoir des informations de sélection de ressources d'assistance en provenance d'un second dispositif sans fil, dans lequel les informations de sélection de ressources d'assistance comprennent un ensemble de ressources candidates pouvant être utilisées par le premier dispositif sans fil (1505) ;
sélectionner des ressources de transmission d'intersection entre des ressources de transmission fournies par les informations de sélection de ressources d'assistance et les propres résultats de détection du premier dispositif sans fil ; et
réaliser une priorisation sur un canal logique.

9. Support non transitoire lisible par machine selon la revendication 8, dans lequel les instructions sont configurées pour, lorsqu'elles sont exécutées, amener la machine à mettre en œuvre le procédé selon l'une quelconque des revendications 2 à 5.
